(19) Europäisches Patentamt

European Patent Office

Office européen des brevets

(11) Publication number: **0 045 139**
**B1**

(12) **EUROPEAN PATENT SPECIFICATION**

(45) Date of publication of patent specification: **03.10.84**

(21) Application number: **81302957.6**

(22) Date of filing: **30.06.81**

(51) Int. Cl.³: **B 60 J 5/06**

(54) **A structure for preventing a sliding door for an automotive vehicle from moving vertically.**

(30) Priority: **26.07.80 JP 102662/80**

(43) Date of publication of application:
**03.02.82 Bulletin 82/05**

(45) Publication of the grant of the patent:
**03.10.84 Bulletin 84/40**

(84) Designated Contracting States:
**DE FR GB**

(56) References cited:
**GB-A- 953 029**
**GB-A-1 160 685**
**US-A-1 621 802**

(73) Proprietor: **NISSAN MOTOR COMPANY,
LIMITED**
**No.2, Takara-cho, Kanagawa-ku**
**Yokohama-shi Kanagawa-ken 221 (JP)**

(72) Inventor: **Chikaraishi, Takayo**
**8531-14, Ikuta Tama-ku**
**Kawasaki-shi Kanagawa-ken (JP)**

(74) Representative: **Evans, David Charles et al**
**F.J. CLEVELAND & COMPANY 40-43, Chancery
Lane**
**London, WC2A 1JQ (GB)**

Courier Press, Leamington Spa, England.

# Description

The present invention relates to a structure for preventing a sliding door for an automotive vehicle from moving vertically.

In a van type automotive vehicle equipped with a sliding door, the sliding door must be held in position by a proper means so that it can be prevented from moving vertically during driving.

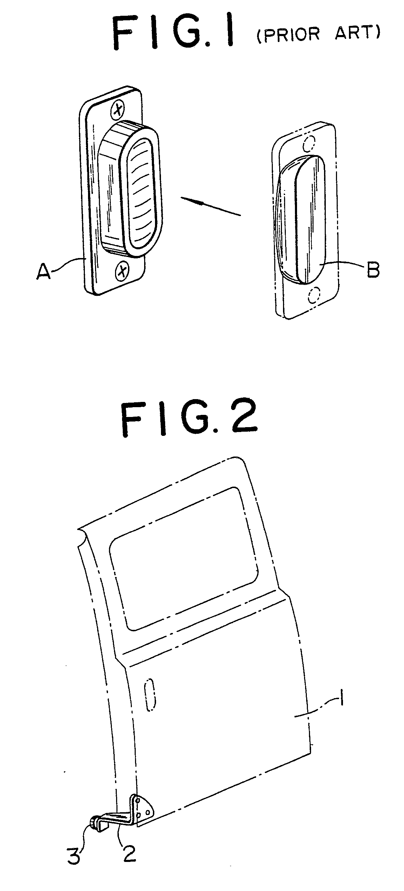

Fig. 1 shows a conventional structure for preventing such a sliding door from moving vertically during driving. A locking device is provided at a rear portion of the door for the purpose of locking the door in a vertical direction. Also, at a front portion of the door, as shown in Fig. 1, a pair of engaging members A, B are arranged between the vehicle body and the door. That is, the engaging member A is fixed to a side of the door and the other engaging member B is fixed to a center pillar of the vehicle body. When the door is closed, the engaging member B engages the other engaging member A so that the door can be prevented from moving vertically.

For such a reason, after the door is assembled, the positions of the engaging members A, B must be precisely adjusted. Even if properly adjusted, the relative positions of those engaging members A, B may change as a result of driving.

G.B.—A—953029 provides a structure for preventing a sliding door from moving vertically, comprising:

the sliding door (1) having an inner and an outer panel;

a vehicle body;

a guide rail (4) fixed to the vehicle body in such a manner that the sliding door (1) can be guided by the guide rail when the sliding door is opened and closed,

a bracket (2) fixed to the sliding door;

a roller (3) attached to the bracket, the roller engaging the guide rail, and a locking element (7) having a tapered surface and being attached to the bracket in such a way that, when the sliding door is closed, the tapered surface of the locking element engages a portion fixed relative to the vehicle body thereby to prevent the sliding door from moving vertically.

The present invention is characterized in the combination of the guide rail being inwardly curved and in that the tapered surface (9a) of the locking element slopes in a direction generally perpendicular to the plane of the sliding door, thereby to interlock the door with the body and prevent relative vertical movement.

## Brief Description of the Drawings

Fig. 1 is a schematic perspective showing a conventional structure for preventing a sliding door from moving vertically;

Fig. 2 is a schematic perspective view showing a sliding door equipped with a structure for preventing it from moving vertically according to a preferred embodiment of the present invention;

Fig. 3 is a perspective view showing a front end portion of a guide rail for use in the structure as shown in Fig. 2;

Fig. 4 is a perspective view showing an essential portion of the structure as shown in Fig. 2; and

Fig. 5 shows a vertical section of the structure as shown in Fig. 2.

## Detailed Description of the Preferred Embodiment

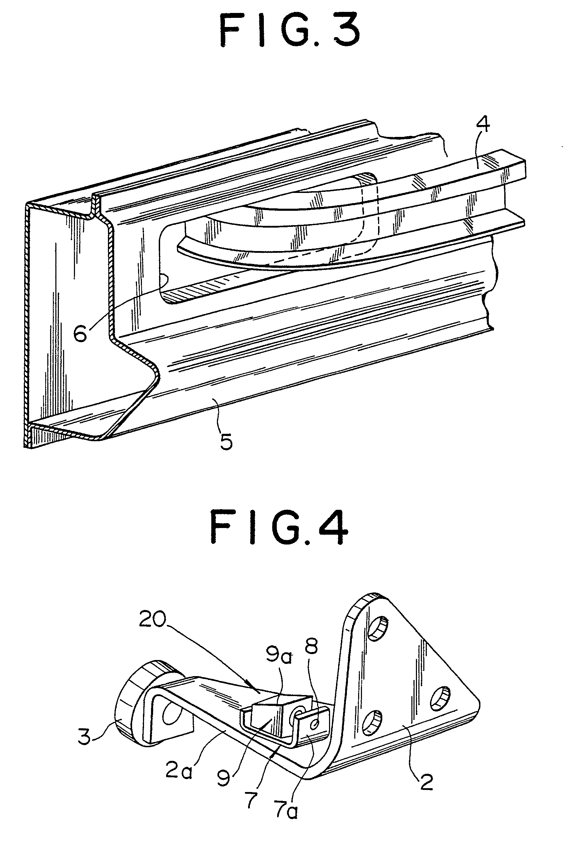

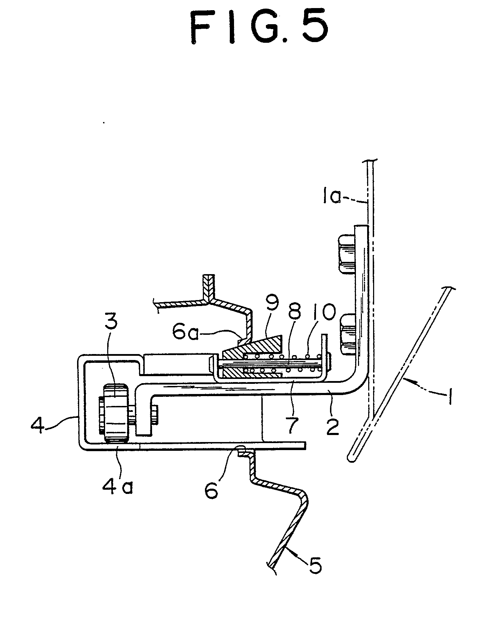

Referring now to Figs. 2 to 5, a sliding door 1 is provided to an automotive vehicle body (not shown). A bracket 2 is fixed to a lower end portion of the front side of the door 1. A roller 3 is attached to the inner end of the bracket 2. The roller 3 engages a lower guide rail 4 and an upper guide rail (not shown). The front end portion of the guide rail 4 is curved toward the inner of the vehicle body as shown in Fig. 3. When the sliding door 1 is closed, the outer surface of the sliding door 1 comes in alignment with the outer surface of the body. When the sliding door 1 is opened, the outer surface of the door 1 slightly shifts outwardly from the body.

The guide rail 4 is fixed along the outer surface of the sill outer panel 5 and curved at the front end portion to be inserted into the sill through a rectangular opening 6 of the sill outer panel 5.

In the illustrated embodiment, the bracket 2 is formed of a plate-like member, having the inner end downwardly bent and the other end upwardly bent. The roller 3 is attached onto the inner end of the bracket 2. The other end of the bracket 2 is fixed to the inner panel 1a of the sliding door 1 at a lower end portion thereof by bolts.

As shown in Fig. 4, a locking device 20 is arranged on the bracket 2. A fitting member 7 of a channel shape in section has two bent portions or legs 7a and is fixed to the upperside of the horizontally extending portion 2a of the bracket 2 in such a manner that the two legs 7a of the fitting member 7 protrude upwardly. A pin 8 is attached to the fitting member 7 in a direction in parallel with the shaft for the roller 3, that is, in a direction perpendicular to the outer surface of the body. A locking element 9 is slidably set onto the pin 8. The locking element 9 may be made of a resin material. The locking element 9 has a tapered surface 9a which inclines or slopes down toward the roller 3.

The locking element 9 can move slidably along the pin 8 between the two legs or bent portions 7a of the fitting member 7. It is preferable that a compressed coil spring 10 is disposed between the locking element 9 and the leg 7a of the fitting member 7 in such a way that the locking element 9 is biased always toward the roller 3.

In operation, when the door 1 is moved forwardly and closed, the roller 3 is guided by the guide rail 4 to move along it. At the front end portion of the guide rail 4, the roller 3 moves into the opening 6 of the sill outer panel 5 along the curved portion of the guide rail 4. At that time, the sliding door 1 shifts toward the center of the vehicle body while the tapered surface 9a of the locking element 9 contacts a portion 6a of the sill outer panel 5 at the upper edge of the opening 6 formed in the sill outer panel 5. Thus, the locking element 9 is pressed downwardly by means of the portions 6a of the sill outer panel 5 at the upper edge of the opening 6. As a result, the roller 3 is pressed onto the lower portion 4a of the guide rail 4 so that the sliding door 1 is prevented from moving downwardly due to the roller 3 while the sliding door 1 is prevented from moving upwardly due to the locking element 9. That is, the sliding door 1 can be prevented from moving in a vertical direction.

Even if the sliding door 1 slightly shifts, the tapered surface 9a of the locking element 9 surely engages the portion 6a of the sill outer panel 5 so that the door 1 can be prevented from moving vertically without errors.

Because the locking element 9 is always biased by the coil spring 10 toward the roller 3, if a gap is formed between the locking element 9 and the sill outer panel 5 during driving, the locking element 9 is biased by the force of the spring 10 to contact the portion 6a of the sill outer panel 5.

Although a preferred embodiment of the present invention has been shown and described, the present invention is not limited thereto. For example, a locking device can be provided at an upper portion of the sliding door. A bracket can be attached to an upper end portion of the inner panel 1a of the sliding door 1 in such a manner that a roller engages an upper guide rail. A locking element can contact a portion of a roof side panel so that a sliding door can be prevented from moving vertically.

According to the present invention, a sliding door can be prevented from moving vertically by means of engagement of the locking element with a portion of a sill outer panel, roof side panel or the like. During driving, vibration of the sliding door can be avoided. Even if a predetermined position of the sliding door shifts after its original setting, it is not required to adjust it because the locking element can surely engage a portion fixed relative to the vehicle.

The present invention can be applied to a vehicle equipped with a sliding door, having no center pillar because a bracket can be fixed to an upper end portion or lower end portion of the sliding door.

### Claims

1. A structure for preventing a sliding door from moving vertically, comprising:
   the sliding door (1) having an inner and an outer panel;
   a vehicle body;
   a guide rail (4) fixed to the vehicle body in such a mnner that the sliding door (1) can be guided by the guide rail when the sliding door is opened and closed,
   a bracket (2) fixed to the sliding door;
   a roller (3) attached to the bracket, the roller engaging the guide rail, and a locking element (9) having a tapered surface and being attached to the bracket in such a way that, when the sliding door is closed, the tapered surface of the locking element engages a portion fixed relative to the vehicle body thereby to prevent the sliding door from moving vertically, characterized in the combination of the guide rail being inwardly curved and in that the tapered surface (9a) of the locking element slopes in a direction generally perpendicular to the plane of the sliding door, thereby to interlock the door with the body and prevent relative vertical movement.

2. A structure of claim 1, further comprising a fitting member (7) having a horizontally extending portion and two legs formed at both ends of the horizontally extending portion, the locking element (9) being placed between the two legs of the fitting member so that the locking element can move therebetween.

3. A structure of claim 2, further comprising a spring (10) disposed between one of the legs of the fitting member and the locking element in such a manner that the locking element is biased toward the roller (3).

4. A structure of any preceding claim wherein the tapered surface of the locking element slopes down toward the roller.

5. A structure of claim 4, wherein the tapered surface of the locking element contacts a portion (6a) of a sill outer panel along which the guide rail is provided.

6. A structure of claim 5, wherein the sill outer panel has an opening (6) into which the curved portion of the guide rail is inserted, and when the sliding door is closed the tapered surface of the locking element is pressed at the upper edge of the opening of the sill outer panel so that the roller is pressed down to the guide rail.

7. A structure of claim 1, wherein the tapered surface of the locking element contacts a portion of a roof side panel, and the guide rail is an upper guide rail.

8. A structure of claim 1, wherein the guide rail is a lower guide rail.

### Revendications

1. Structure empêchant une porte coulissante d'un véhicule automobile de se mouvoir verticalement, comprenant:
   la porte coulissante (1) ayant un panneau interne et un panneau externe;
   une carrosserie de véhicule;
   un rail de guidage (4) fixé à la carrosserie du véhicule de façon que la porte coulissante (1) puisse être guidée par le rail de guidage lorsque la porte coulissante est ouverte et fermée,
une patte (2) fixée à la porte coulissante;

un galet (3) fixé à la patte, le galet engageant le rail de guidage, et un élément de blocage (9) ayant une surface effilée et fixé à la patte de façon que, lorsque la porte coulissante est fermée, la surface effilé de l'élément de blocage engage une partie fixe par rapport à la carrosserie du véhicule pour ainsi empêcher la porte coulissante de se déplacer verticalement, caractérisée en ce que le rail de guidage est courbé vers l'intérieur et en ce que la surface effilée (9a) de l'élément de blocage est en pente dans une direction généralement perpendiculaire au plan de la porte coulissante, pour ainsi être solidaire de la porte de la carrosserie et empêcher un mouvement relatif.

2. Structure selon la revendication 1 comprenant de plus un organe de fixation (7) ayant une partie s'étendant horizontalement et deux branches formées aux deux extrémités de la partie s'étendant horizontalement, l'élément de blocage (9) étant placé entre les deux branches de l'organe de fixation de façon que l'élément de blocage puisse se déplacer entre elles.

3. Structure selon la revendication 2 comprenant de plus un ressort (10) disposé entre l'une des branches de l'organe de fixation et l'élément de blocage de façon que l'élément de blocage soit sollicité vers le galet (3).

4. Structure selon l'une quelconque des revendications précédentes où la surface éffilée de l'élément de blocage est en pente vers le galet.

5. Structure selon la revendication 4 où la surface effilée de l'élément de blocage contacte une partie (6a) d'un panneau externe de traverse le long duquel est prévu le rail de guidage.

6. Structure selon la revendication 5 où le panneau externe de traverse a une ouverture (6) dans laquelle est inséré la partie courbée du rail de guidage et lorsque la porte coulissante est fermée, la surface effilée de l'élément de blocage est pressée au bord supérieur de l'ouverture du panneau externe de traverse de façon que le galet soit pressé vers le bas contre le rail de guidage.

7. Structure selon la revendication 1 où la surface effilée de l'élément de blocage contacte une partie d'un panneau latéral de toit, et le rail de guidage est un rail de guidage supérieur.

8. Structure selon la revendication 1 où le rail de guidage est un rail de guidage inférieur.

**Patentansprüche**

1. Anordnung für Schiebetüren, die eine senkrechte Verschiebung verhindert, mit:
der Schiebetür (1) mit einem inneren und einem äußeren Paneel;
einer Karosserie;
einer Führungsschiene (4), die derart an der Karosserie befestigt ist, daß die Schiebetür (1) durch die Führungsschiene geführt werden kann, wenn die Schiebetür geöffnet oder geschlossen wird,
einer an der Schiebetür befestigten Klammer (2); ist;
einer an der Klammer angebrachten Rolle, wobei die Rolle in die Führungsschiene eingreift, und einem Sperrelement (9), das eine verjüngte Oberfläche hat und derart an der Klammer angebracht ist, daß, wenn die Schiebetür geschlossen ist, die verjüngte Oberfläche des Sperrelementes in ein Teil eingreift, das relativ zur Karosserie befestigt ist, um dabei eine senkrechte Verschiebung der Schiebetüre zu verhindern, gekennzeichnet durch die Kombination der einwärts gebogenen Führungsschiene und dadurch, daß die verjüngte Oberfläche (9a) des Sperrelementes in eine Richtung im allgemeinen senkrecht zur Ebene der Schiebetür schräg abfällt, um dabei die Türe mit der Karosserie zu verriegeln und eine entsprechende, senkrechte Bewegung zu verhindern.

2. Anordnung nach Anspruch 1, die ferner ein Beschlagteil (7) mit einem sich horizontal erstreckenden Teil und zwei an den beiden Enden des sich horizontal erstreckenden Teils gebildeten Schenkeln umfaßt, wobei das Sperrelement (9) so zwischen den zwei Schenkeln des Beschlagteils angeordnet ist, daß sich das Sperrelement dazwischen bewegen kann.

3. Anordnung nach Anspruch 2, die ferner eine Feder (10) umfaßt, die zwischen einem der Schenkel des Beschlagteils und dem Sperrelement derart angeordnet ist, daß das Sperrelement auf die Rolle (3) zu vorgespannt ist.

4. Anordnung nach mindestens einem der vorhergehenden Ansprüche, worin die verjüngte Oberfläche des Sperrelementes nach unten auf die Rolle zu abfällt.

5. Anordnung nach Anspruch 4, worin die verjüngte Oberfläche des Sperrelementes ein Teil (6a) eines äußeren Schwellerpaneels berührt, entlang dessen die Führungsschiene vorgesehen ist.

6. Anordnung nach Anspruch 5, worin das äußere Schwellerpaneel eine Öffnung (6) hat, in die der gebogene Teil der Führungsschiene eingesetzt ist, und wenn die Schiebetür geschlossen ist, die verjüngte Oberfläche des Sperrelementes an die Oberkante der Öffnung des äußeren Schwellerpaneels angedrückt ist, so daß die Rolle nach unten auf die Führungsschiene gedrückt ist.

7. Anordnung nach Anspruch 1, worin die verjüngte Oberfläche des Sperrelementes ein Teil eines mit einem Dach versehenen Seitenpaneels berührt, und die Führungsschiene eine obere Führungsschiene ist.

8. Anordnung nach Anspruch 1, worin die Führungsschiene eine untere Führungsschiene ist.

# FIG.1 (PRIOR ART)

A

B

# FIG.2

1

# FIG. 3

4

6

5

# FIG. 4

20

9a  8

3

2a  9

7  7a

2

# FIG. 5